# EUROPEAN PATENT APPLICATION

(11) **EP 4 697 838 A1**
(43) Date of publication of application: **18.02.2026**
(21) Application number: 23932453.6
(22) Date of filing: 13.04.2023
(51) Int. Cl.: H04W 72/20

(54) **WIRELESS COMMUNICATION METHOD, SENDING END DEVICE, AND RECEIVING END DEVICE**

(71) Applicant: GUANGDONG OPPO MOBILE TELECOMMUNICATIONS CORP., LTD., Dongguan, Guangdong 523860 (CN)
(72) Inventor: HE, Chuanfeng, Dongguan, Guangdong 523860 (CN)
(74) Representative: RGTH
(86) International application number: PCT/CN2023/088045
(87) International publication number: WO 2024/212162

(57) **Abstract**

A wireless communication method, a sending end device, and a receiving end device, which help ensure signal reception performance. The method comprises: a sending end device sending a first signal to a receiving end device, the first signal being used for indicating a signal generation mode for and/or resource position information of a target signal, the target signal being a signal sent by the sending end device to the receiving end device.

## Description

### TECHNICAL FIELD

Embodiments of the present disclosure relate to the field of communication, and in particular, to a wireless communication method, a transmitting device, and a receiving device.

### BACKGROUND

In some scenarios, a transmitting device may select a signal generation mode from a plurality of signal generation modes to generate a signal to be sent, as needed. In this way, for a receiving device, how to receive the signal to ensure the signal reception performance is an urgent problem to be solved.

### SUMMARY

The present disclosure provides a wireless communication method, a transmitting device and a receiving device, which are helpful to ensure the signal reception performance.

In a first aspect, a wireless communication method is provided, including: transmitting, by a transmitting device, a first signal to a receiving device, where the first signal is used to indicate a signal generation mode and/or resource position information of a target signal, and the target signal is a signal transmitted from the transmitting device to the receiving device.

In a second aspect, a wireless communication method is provided, including: receiving, by a receiving device, a first signal transmitted from a transmitting device, where the first signal is used to indicate a signal generation mode and/or resource position information of a target signal, and the target signal is a signal transmitted from the transmitting device to the receiving device.

In a third aspect, a transmitting device is provided, and configured to perform the method in the above second aspect or various implementations thereof.

Specifically, the transmitting device includes a functional module configured to perform the method in the above second aspect or various implementations thereof.

In a fourth aspect, a receiving device is provided, and configured to perform the method in the above first aspect or various implementations thereof.

Specifically, the receiving device includes a functional module configured to perform the method in the above first aspect or various implementations thereof.

In a fifth aspect, a transmitting device is provided, and includes a processor and a memory. The memory is configured to store a computer program, and the processor is configured to call and run the computer program stored in the memory to perform the method in the above second aspect or various implementations thereof.

In a sixth aspect, a receiving device is provided, and includes a processor and a memory. The memory is configured to store a computer program, and the processor is configured to call and run the computer program stored in the memory to perform the method in the above first aspect or various implementations thereof.

In a seventh aspect, a chip is provided, and configured to implement the method in any one of the above first aspect to second aspect or various implementations thereof. Specifically, the chip includes a processor, and the processor is configured to call and run a computer program from a memory to enable a device equipped with the apparatus to perform the method in any one of the above first aspect to second aspect or various implementations thereof.

In an eighth aspect, a computer-readable storage medium is provided, and configured to store a computer program. The computer program enables a computer to perform the method in any one of the above first aspect to second aspect or various implementations thereof.

In a ninth aspect, a computer program product is provided, and includes computer program instructions. The computer program instructions enable a computer to perform the method in any one of the above first aspect to second aspect or various implementations thereof.

In a tenth aspect, a computer program is provided. The computer program, when executed on a computer, enables a computer to perform the method in any one of the above first aspect to second aspect or various implementations thereof.

Through the above technical solution, the transmitting device may indicate the signal generation mode and/or the resource position information of the target signal to the receiving device, through the first signal. In this way, the receiving device may receive the target signal according to the signal generation mode and/or the resource position information indicated by the first signal, thereby ensuring the reception performance of the target signal.

### BRIEF DESCRIPTION OF THE DRAWINGS

FIG. 1 is a schematic diagram of a communication system architecture provided in the embodiments of the present disclosure.
FIG. 2 is a schematic diagram of a zero-power communication system according to an example of the present disclosure.
FIG. 3 is a schematic diagram of power harvesting according to an embodiment of the present disclosure.
FIG. 4 is a schematic diagram of back scattering communication according to an embodiment of the present disclosure.
FIG. 5 is a schematic diagram of a circuit of resistive load modulation according to an embodiment of the present disclosure.
FIG. 6 is a schematic diagram of a form of a receiver of a terminal device provided in the embodiments of the present disclosure.
FIG. 7 is a schematic diagram of an information composition of a WUR PPDU provided in the embodiments of the present disclosure.
FIG. 8 is a schematic diagram of a generation principle of a WUR PPDU provided in the embodiments of the present disclosure.
FIG. 9 is a schematic diagram of an MC-OOK signal generated by multi-carrier provided in the embodiments of the present disclosure.
FIG. 10 is a schematic diagram of an MC-ASK waveform generation mode provided in the embodiments of the present disclosure.
FIG. 11 is a schematic diagram of an MC-ASK waveform generation mode provided in the embodiments of the present disclosure.
FIG. 12 is a schematic diagram of an MC-ASK waveform generation mode provided in the embodiments of the present disclosure.
FIG. 13 is a schematic diagram of a wireless communication method provided according to the embodiments of the present disclosure.
FIG. 14 to FIG. 21 are schematic diagrams of a relationship between subcarriers occupied by a first signal and a target signal provided in the embodiments of the present disclosure.
FIG. 22 is a schematic block diagram of a transmitting device provided in the embodiments of the present disclosure.
FIG. 23 is a schematic block diagram of a receiving device provided in the embodiments of the present disclosure.
FIG. 24 is a schematic block diagram of a communication device provided in the embodiments of the present disclosure.
FIG. 25 is a schematic block diagram of a chip provided in the embodiments of the present disclosure.
FIG. 26 is a schematic block diagram of a communication system provided in the embodiments of the present disclosure.

### DETAILED DESCRIPTION

Technical solutions in the embodiments of the present disclosure will be described below with reference to the drawings in the embodiments of the present disclosure, and it is obvious that, the described embodiments are a part of the embodiments of the present disclosure, rather than all of the embodiments. With respect to the embodiments in the present disclosure, all other embodiments obtained by those ordinary skilled in the art without making any creative work shall fall within the scope of protection of the present disclosure.

The technical solutions in the embodiments of the present disclosure may be applied to various communication systems, such as: a global system of mobile communication (GSM) system, a code division multiple access (CDMA) system, a wideband code division multiple access (WCDMA) system, a general packet radio service (GPRS), a long term evolution (LTE) system, an advanced long term evolution (LTE-A) system, a new radio (NR) system, an evolution system of the NR system, an LTE-based access to unlicensed spectrum (LTE-U) system, an NR-based access to unlicensed spectrum (NR-U) system, a non-terrestrial communication networks (Non-Terrestrial Networks, NTN) system, a universal mobile telecommunications system (UMTS), wireless local area networks (WLAN), wireless fidelity (WiFi), a 5th-generation (5G) communication system, a cellular Internet of Things system, a cellular passive Internet of Things system or other communication systems, etc.

Generally speaking, traditional communication systems support a limited number of connections, which is also easy to implement. However, with the development of the communication technology, mobile communication systems will not only support traditional communications, but also support, for example, device to device (D2D) communication, machine to machine (M2M) communication, machine type communication (MTC), vehicle to vehicle (V2V) communication, or vehicle to everything (V2X) communication, etc. The embodiments of the present disclosure may also be applied to these communication systems as well.

Optionally, the communication system in the embodiments of the present disclosure may be applied to a carrier aggregation (CA) scenario, a dual connectivity (DC) scenario, and may also be applied to a standalone (SA) network deployment scenario.

Optionally, the communication system in the embodiments of the present disclosure may be applied to an unlicensed spectrum, where the unlicensed spectrum may also be considered as a shared spectrum. Alternatively, the communication system in the embodiments of the present disclosure may be applied to a licensed spectrum, where the licensed spectrum may be considered as an unshared spectrum.

In the embodiments of the present disclosure, each embodiment is described in conjunction with a network device and a terminal device, where the terminal device may be referred to as a user equipment (UE), an access terminal, a user unit, a user station, a mobile station, a mobile platform, a remote station, a remote terminal, a mobile device, a user terminal, a terminal, a wireless communication device, a user agent, a user apparatus, or the like.

In the embodiments of the present disclosure, the network device may be a device for communicating with a mobile device. The network device may be an access point (AP) in WLAN, a base station (Base Transceiver Station, BTS) in GSM or CDMA, a base station (NodeB, NB) in WCDMA, an evolutional base station (Evolutional NodeB, eNB or eNodeB) in LTE, or a relay station or an access point, or a vehicle-mounted device, a wearable device, and a network device (gNB) in an NR network, or a network device in the cellular Internet of Things, or a network device in the cellular passive Internet of Things, or a network device in a future-evolved PLMN network, or a network device in an NTN network, or the like.

As an example but not a limitation, in the embodiments of the present disclosure, the network device may have mobile characteristics. For example, the network device may be a device which is mobile. Optionally, the network device may be a satellite, or a balloon station. For example, the satellite may be a low earth orbit (LEO) satellite, a medium earth orbit (MEO) satellite, a geostationary earth orbit (GEO) satellite, or a high elliptical orbit (HEO) satellite, etc. Optionally, the network device may also be a base station deployed on land, water, or other places.

In the embodiments of the present disclosure, the network device may provide a service for a cell, and the terminal device communicates with the network device through a transmission resource (e.g., a frequency-domain resource, or in other words, a spectrum resource) used by the cell. The cell may be a cell corresponding to the network device (e.g., a base station), and the cell may belong to a macro base station, or may belong to a base station corresponding to a small cell. The small cell here may include: a metro cell, a micro cell, a pico cell, or a femto cell, or the like. These small cells have characteristics of small coverage ranges and low transmission power, which are applicable for providing a data transmission service with a high speed.

The terminal device may be a station (STATION, ST) in the WLAN, or may be a cellular phone, a cordless phone, a session initiation protocol (Session Initiation Protocol, SIP) phone, a wireless local loop (Wireless Local Loop, WLL) station, a personal digital assistant (Personal Digital Assistant, PDA) device, a handheld device with a wireless communication function, a computing device or other processing devices connected to a wireless modem, an in-vehicle device, a wearable device, a terminal device in a next generation communication system (e.g., an NR network), a terminal device in a future evolved public land mobile network (Public Land Mobile Network, PLMN) network, a terminal device in the cellular Internet of Things, a terminal device in the cellular passive Internet of Things, or the like.

In the embodiments of the present disclosure, the terminal device may be deployed on land, including indoor or outdoor, handheld, wearable, or in-vehicle; the terminal device may also be deployed on water (e.g., on a steamship, etc.); the terminal device may also be deployed in air (e.g., on an airplane, on a balloon, or on a satellite, etc.).

In the embodiments of the present disclosure, the terminal device may be a mobile phone, a pad, a computer with a wireless transceiver function, a virtual reality (VR) terminal device, an augmented reality (AR) terminal device, a wireless terminal device in industrial control, a wireless terminal device in self-driving, a wireless terminal device in remote medical, a wireless terminal device in smart grid, a wireless terminal device in transportation safety, a wireless terminal device in smart city, or a wireless terminal device in smart home, or the like.

As an example but not a limitation, in the embodiments of the present disclosure, the terminal device may also be a wearable device. The wearable device may be referred to as a wearable smart device, which is a general term for wearable devices developed by performing the intellectualized design on daily wear by applying wearable technologies, such as glasses, gloves, watches, clothing and shoes, etc. The wearable device is a portable device that is worn directly on a body, or integrated into the clothes or accessories of users. The wearable device is not only a hardware device, but also implements powerful functions by software support as well as data interaction or cloud interaction. Generalized wearable smart devices include devices, that are fully functional, large in size and may implement all or part of functions without relying on smart phones, such as smart watches or smart glasses; as well as devices, that only focus on a certain type of application function and need to be used in conjunction with other devices (e.g., a smart phone), such as various smart bracelets and smart jewelry that monitor physical signs, or the like.

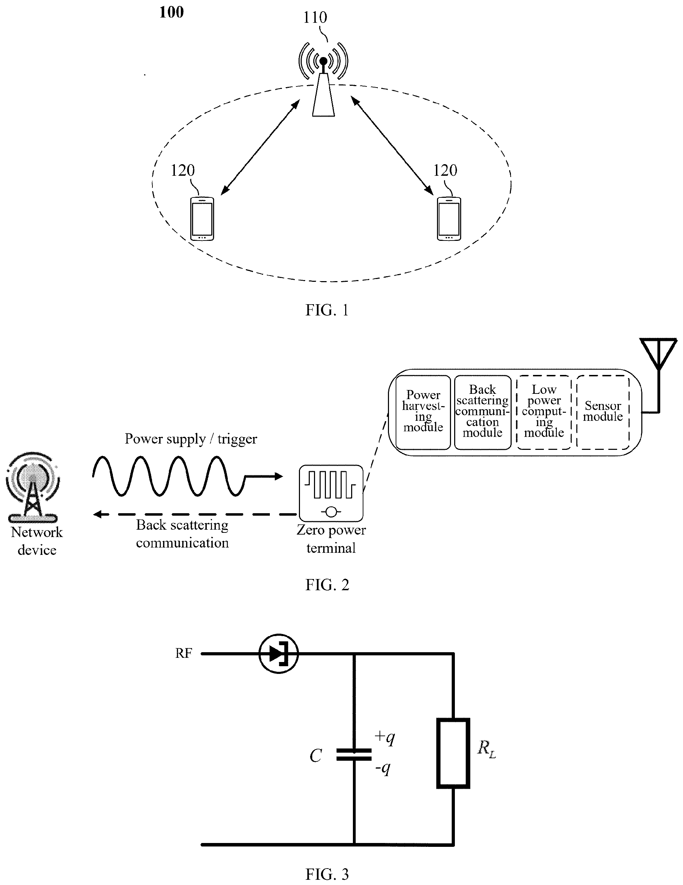

Exemplarily, a communication system 100 applied by the embodiments of the present disclosure is shown in FIG. 1. The communication system 100 may include a network device 110, and the network device 110 may be a device for communicating with terminal devices 120 (or referred to as communication terminals or terminals). The network device 110 may provide communication coverage for a specific geographical area and may communicate with terminal devices located within the coverage area.

FIG. 1 exemplarily shows a network device and two terminal devices, and optionally, the communication system 100 may include a plurality of network devices, another number of terminal devices may be included within a coverage range of each of the network devices, which is not limited in the embodiments of the present disclosure.

Optionally, the communication system 100 may further include other network entities such as a network controller, a mobility management entity, or the like, which are not limited in the embodiments of the present disclosure.

It should be understood that, in the embodiments of the present disclosure, a device with a communication function in the network/system may be referred to as a communication device. Taking the communication system 100 shown in FIG. 1 as an example, the communication device may include a network device 110 with a communication function and a terminal device 120 with a communication function. The network device 110 and the terminal device 120 may be the specific devices described above, which will not be repeated here. The communication device may further include other devices in the communication system 100, such as a network controller, a mobility management entity, and other network entities, which are not limited in the embodiments of the present disclosure.

It should be understood that the terms "system" and "network" are often used interchangeably herein. The term "and/or" herein is only an association relationship to describe associated objects, indicating that there may be three kinds of relationships, and for example, "A and/or B" may represent three cases where: A exists alone, both A and B exist, and B exists alone. In addition, a character "/" herein generally indicates that the associated objects before and after this character are in an "or" relationship.

It should be understood that, "indicate / indicated / indicating / indication" mentioned in the embodiments of the present disclosure may mean a direct indication, an indirect indication, or may mean that there is an association relationship. For example, A indicating B may mean that A directly indicates B, and for example, B may be acquired by A; alternatively, A indicating B may mean that A indirectly indicates B, and for example, A indicates C, and B may be acquired by C; alternatively, A indicating B may mean that there is an association relationship between A and B.

In the description of the embodiments of the present disclosure, the term "correspond / corresponding / correspondence" may mean that there is a direct correspondence or an indirect correspondence between the two, or may mean that there is an association relationship between the two, or may mean a relationship of indicating and being indicated, or a relationship of configuring and being configured, or the like.

In the embodiments of the present disclosure, the "predefined" may be implemented by pre-saving corresponding codes, tables or other manners that may be used to indicate related information, in the device (for example, including the terminal device and the network device), and the present disclosure does not limit its specific implementation. For example, the predefined may refer to what is defined in a protocol.

In the embodiments of the present disclosure, the "protocol" may refer to standard protocols in the communication field, for example, may include an LTE protocol, an NR protocol, and related protocols applied in future communication systems, which are not limited to the present disclosure.

To facilitate the understanding of the technical solutions in the embodiments of the present disclosure, the relevant technologies of the present disclosure are explained.

### I. Zero power communication

Key technologies of the zero power communication include power harvesting, back scattering communication and a low-power consumption technology.

As shown in FIG. 2, a typical zero power communication system (e.g., a Radio Frequency Identification (RFID) system) includes a network device (e.g., a reader/writer of the RFID system) and a zero power terminal (e.g., an electronic tag). The network device is used to transmit a wireless power supply signal, a downlink communication signal to the zero power terminal, and receive a back scattering signal from the zero power terminal. A basic zero power terminal includes a power harvesting module, a back scattering communication module and a low-power consumption computing module. In addition, the zero power terminal may further have a memory or a sensor, for storing some basic information (such as an object identification) or sensor data such as ambient temperature and ambient humidity, etc.

For example, the power harvesting module may harvest power carried in radio waves in space (radio waves emitted by the network device as shown in FIG. 2), to drive the low-power consumption computing module of the zero power terminal and implement back scattering communication. After obtaining power, the zero power terminal may receive a control command from the network device, and transmit data to the network device based on the back scattering mode, based on the control signaling. The transmitted data may be data stored in the zero power terminal itself (such as an identity identification or pre-written information, such as production date, brand and manufacturer of the product, etc.). The zero power terminal may also be loaded with various types of sensors, thereby reporting data harvested by the various types of sensors, based on a zero power mechanism.

The key technologies in the zero power communication are described below.

### 1. Radio frequency power harvesting (RF Power Harvesting)

As shown in FIG. 3, a radio frequency power harvesting module implements the harvesting of spacial electromagnetic wave power based on an electromagnetic induction principle, and then obtains power required for driving the zero power terminal to work, such as driving a low-power consumption demodulation and modulation module, sensors, and memory reading, etc. Therefore, the zero power terminal does not need a traditional battery.

### 2. Back scattering communication (Back Scattering)

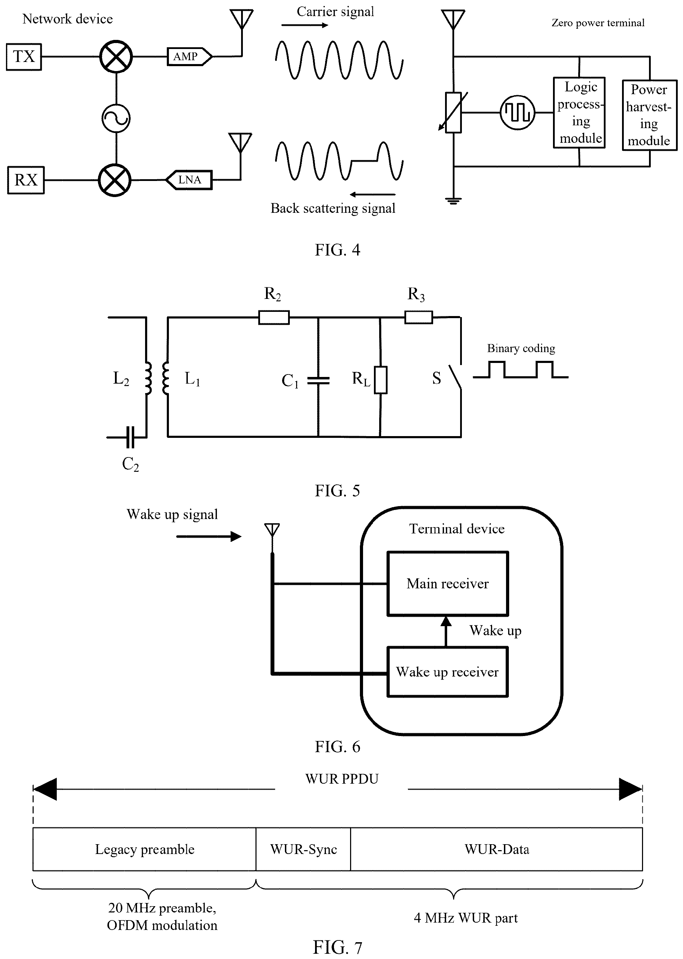

As shown in FIG. 4, the zero power terminal receives a carrier signal transmitted by the network device and modulates the carrier signal, loads information to be transmitted and radiates the modulated signal from an antenna (antennas). This information transmission process is called back scattering communication. Back scattering and load modulation functions are inseparable. The load modulation changes the magnitude of an impedance and other parameters of the zero power terminal, by adjusting and controlling an electrical parameter of an oscillation circuit of the zero power terminal according to the rhythm of a data stream, thereby completing the modulation process. The load modulation technology mainly includes two modes: resistive load modulation and capacitive load modulation. In the resistive load modulation, a resistor is connected in parallel with the load, and the resistor is turned on or off based on the control of a binary data stream, as shown in FIG. 5. The on and off of the resistor will cause the change of the circuit voltage, thereby implementing amplitude keying modulation (ASK). That is, the modulation and transmission of the signal are implemented by adjusting the magnitude of the amplitude of the back scattering signal of the zero power terminal. Similarly, in the capacitive load modulation, the change of the resonant frequency of the circuit may be implemented by the on and off of the capacitor, thereby implementing frequency keying modulation (Frequency Shift Keying, FSK). That is, the modulation and transmission of the signal are implemented by adjusting the working frequency of the back scattering signal of the zero power terminal.

It can be seen that the zero power terminal performs information modulation on an incoming wave signal by means of the load modulation mode, thereby implementing the back scattering communication process. Therefore, the zero power terminal has significant advantages:
(1) It does not actively transmit a signal, so it does not need a complex radio frequency link, such as a PA, a radio frequency filter, etc.
(2) It does not need to actively generate a high-frequency signal, so it does not need a high-frequency crystal oscillator.
(3) By means of the back scattering communication, the terminal' s signal transmission does not need to consume the terminal's own power.

### 3. Coding technology

For the data transmitted from the zero power terminal, different forms of codes may be used to represent binary "1" and "0". The wireless radio frequency identification system usually uses one of the following coding methods: reverse non-return to zero (NRZ) coding, Manchester coding, unipolar return to zero coding, differential bi-phase (DBP) coding, differential coding, pulse interval coding (PIE), bi-phase space coding (FM0), Miller coding with differential coding, etc. In simple terms, different coding technologies use different pulse signals to represent 0 and 1.

The zero power communication may be widely used in various industries due to its significant advantages such as extremely low cost, zero power consumption, and small size, such as logistics, smart warehousing, smart agriculture, energy and electricity, industrial Internet, etc., oriented to vertical industries; it may also be applied to personal applications such as smart wearable and smart home.

In some scenarios, based on power sources and usage modes of zero power terminals, the zero power terminals may be divided into the following types:

### 1. Passive zero power terminal

The zero power terminal (such as the electronic tag in the RFID system) does not need an internal battery, and when the zero power terminal approaches the network device (such as the reader/writer in the RFID system), the zero power terminal is located within a near field range formed by antenna radiation of the network device. Therefore, the antenna of the zero power terminal generates an induced current through electromagnetic induction, and the induced current drives a low-power consumption chip circuit of the zero power terminal. Demodulation of a forward link signal, and modulation of a reverse link (or reflection link) signal and other works are implemented. For the back scattering link, the zero power terminal transmits a signal by the back scattering implementation.

It may be seen that the passive zero power terminal does not need an internal battery to drive both the forward link and the reverse link, and is a true zero power terminal.

The passive zero power terminal does not need the battery, the radio frequency circuit and the baseband circuit are very simple, and they do not need, for example, a low-noise amplifier (LNA), a power amplifier (PA), a crystal oscillator, analog-to-digital converters (Analog-to-Digital Converter, ADC) and other devices. Therefore, the passive zero power terminal has many advantages such as small size, light weight, very cheap price, and long service life, etc.

### 2. Semi-passive zero power terminal

The semi-passive zero power terminal is also not equipped with a conventional battery itself, but may use an RF power harvesting module to harvest radio wave power, and meanwhile, store the harvested power into a power storage unit (such as a capacitor). After obtaining the power, the power storage unit may drive a low-power consumption chip circuit of the zero power terminal. Demodulation of the forward link signal, and modulation of the reverse link signal and other works are implemented. For the back scattering link, the zero power terminal transmits a signal by the back scattering implementation.

It can be seen that the semi-passive zero power terminal does not need an internal battery to drive both the forward link and the reverse link. Although the power stored in the capacitor is used in the work, the power comes from the radio power harvested by the power harvesting module. Therefore, it is also a true zero power terminal.

The semi-passive zero power terminal inherits many advantages of the passive zero power terminal, so it has many advantages such as small size, light weight, very cheap price and long service life.

### 3. Active zero power terminal

The zero power terminal used in some scenarios may also be an active zero power terminal, and such a device may have an internal battery. The battery is used to drive a low-power consumption chip circuit of the zero power terminal. Demodulation of the forward link signal, and modulation of the reverse link signal and other works are implemented. However, for the back scattering link, the zero power terminal transmits a signal by the back scattering implementation. Therefore, the zero power of such a device is mainly reflected in the fact that the signal transmission of the reverse link does not need the terminal's own power, but uses the back scattering mode.

The active zero power terminal is equipped with an internal battery to supply power for an RFID chip, to increase a reading-writing distance of the active zero power terminal and improve the reliability of communications. Therefore, it may be applied in some scenarios with relatively high requirements on aspects such as the communication distance, reading latency, etc.

In some scenarios, zero power devices may be classified into the following types based on the type of transmitter.

### 1) Zero power device based on back scattering

This type of zero power device transmits uplink data by using the aforementioned back scattering mode. This type of zero power device does not have an active transmitter for the active transmission, but only has a transmitter for the back scattering. Therefore, when this type of zero power device transmits data, the network device needs to provide a carrier, and this type of zero power device performs back scattering based on the carrier, to implement the data transmission.

### 2) Zero power device based on an active transmitter

This type of zero power device uses an active transmitter with an active transmission capability for an uplink data transmission, therefore, when transmitting data, this type of zero power device may transmit the data by using its own active transmitter, without the need for the network device to provide a carrier. The active transmitter applicable for the zero power device may be, for example, an ultra-low power ASK, an ultra-low power FSK transmitter, etc., and when a 100µw signal is transmitted, the overall power consumption may be reduced to 400 to 600 µw.

### 3) Zero power device with both a back scattering transmitter and an active transmitter

This type of zero power device may support both a back scattering transmitter and an active transmitter. This type of zero power device may determine to use which signal transmission mode, that is, whether to use the active transmitter or the back scattering transmitter to transmit signals, according to different situations (such as an electric quantity condition, available ambient power), or based on scheduling of the network device.

With the booming development of the Internet of Things, the existing Internet of Things communication technologies have been unable to meet the Internet of Things communication needs in many scenarios, as follows.

### 1. Harsh communication environment

Some Internet of Things scenarios may face extreme environments with high temperature, extremely low temperature, high humidity, high voltage, high radiation or high-speed movement, etc., such as an ultra-high voltage substation, high-speed train track monitoring, environment monitoring in a high-cold area, industrial production lines, etc. In these scenarios, existing IoT terminals will be unable to work due to the limitations of the working environment of traditional power supplies. In addition, the extreme working environments are not conducive to the maintenance for the Internet of Things, such as replacement of the battery.

### 2. Demand for an extremely small size of terminal form

Some Internet of Things communication scenarios, such as the food traceability, commodity circulation, and smart wearable, require terminals to have an extremely small size to facilitate the use in these scenarios. For example, Internet of Things terminals used for commodity management in the circulation process usually use the form of electronic tags, which are embedded in the commodity packaging in a very small form. For another example, lightweight wearable devices may meet user needs while improving user experiences.

### 3. Extremely low-cost Internet of Things communication requirements

Numerous Internet of Things communication scenarios require the cost of Internet of Things terminals to be low enough, to improve their competitiveness with respect to other alternative technologies. For example, in logistics or warehousing scenarios, to facilitate the management of a large number of circulating goods, the Internet of Things terminal may be attached onto each goods, so that the accurate management of the entire process and entire cycle of the logistics may be completed through the communication between the terminal and the logistics network. These scenarios require the prices of Internet of Things terminals to be sufficiently competitive.

Therefore, to cover these unmet Internet of Things communication needs, in the cellular network, the Internet of Things with the ultra low cost, extremely small size, and free battery/free maintenance also needs to be developed, and the zero power Internet of Things may just meet these needs.

Zero power Internet of Things (IoT) may also be referred to as ambient power enabled Internet of Things (Ambient power enabled IoT, Ambient IoT or AMP IoT for short). The zero power device may also be referred to as an Ambient IoT device or an AMP IoT device. The ambient IoT device may refer to an IoT device that uses various ambient power, such as wireless radio frequency power, light power, solar power, thermal power, mechanical power, and other ambient power. This type of device may have no power storage capability, or may have a very limited power storage capability, such as using a capacitor with a capacity of tens of µF.

Ambient IoT may be used in at least four scenarios:
1. object recognition, such as logistics, production line product management, and supply chain management;
2. environmental monitoring, such as monitoring of temperature, humidity and harmful gas of the working environment and natural environment;
3. positioning, such as indoor positioning, intelligent object finding, production line goods positioning, etc.;
4. intelligent controlling, such as intelligent control of various electrical appliances in smart home (turning on and off air conditioners, adjusting temperature), and intelligent control of various facilities in agricultural greenhouses (automatic irrigation and fertilization).

In order to further save power of the terminal device, a wake up receiver (WUR) is considered to be introduced, to receive a wake up signal. The wake up receiver has characteristics of extremely low cost, extremely low complexity and extremely low-power consumption, and it mainly receives the wake up signal (WUS) based on an envelope detection scheme. Therefore, the WUS received by the wake up receiver is different in modulation mode, waveform, etc., from a signal carried by a physical downlink control channel (PDCCH). The wake up signal is mainly an envelope signal obtained by performing amplitude keying (Amplitude shift keying, ASK) modulation on the carrier signal. Demodulation of the envelope signal is also completed mainly based on the power provided by the wireless radio frequency signal to drive the low-power consumption circuit, so it may be passive. The wake up receiver may also be powered by the terminal. Regardless of the power supply scheme, the wake up receiver greatly reduces power consumption, compared to a traditional receiver of the UE. The wake up receiver may be combined with the UE, as an additional module of the UE's receiver, or may be used as a separate wake up function module of the UE.

A block diagram of a receiver system based on the wake up signal is shown in FIG. 6. The wake up receiver receives the wake up signal, and may indicate the UE to turn on a primary receiver if the UE is required to turn on the primary receiver. Otherwise, the primary receiver of the UE may be in a turned-off state.

In some scenarios, a wake-up radio (WUR) signal is used to implement the power saving of devices. A WUR AP notifies a WUR non-AP STA of a power saving operation via a WUR wake-up frame. The wake-up frame is carried in a WUR physical layer protocol data unit (Physical layer Protocol Data Unit, PPDU) frame. As shown in FIG. 7, a WUR PPDU frame includes three parts: legacy preamble, WUR synchronization (WUR-Sync) and WUR data (WUR-Data). The function of the legacy preamble is to protect the WUR-Sync and WUR-Data parts, it is a non-WUR part reserved for a compatibility consideration, and it uses traditional orthogonal frequency-division multiplexing (OFDM) modulation and 20MHz bandwidth. WUR-Sync is used to help identify and demodulate the WUR-Data part, and the WUR-Data part is used to carry a WUR PSDU (Physical layer Service Data Unit).

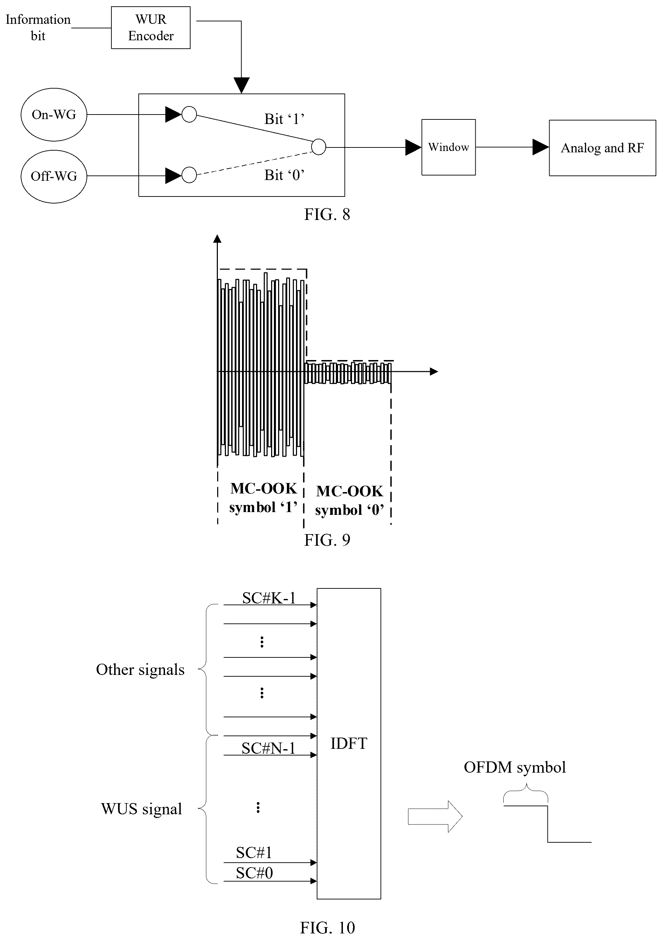

The WUR-Sync part and the WUR-Data part use On-Off Keying (OOK) modulation and 4MHz in the 20MHz channel bandwidth. A modulation principle of OOK is to modulate the amplitude of the carrier signal into non-zero value and zero value, corresponding to On and Off, respectively, to represent information bits. OOK is also known as binary amplitude keying (binary amplitude shift keying, 2ASK). FIG. 8 is a schematic diagram of OOK modulation. The WUR-Data part carries user information. After the user information is coded, OOK modulation is used to form MC-OOK symbols of a corresponding length.

The above OOK signal is generated by a multi-carrier (MC), so the OOK signal is called an MC-OOK signal. The MC-OOK signal may be an OOK signal generated by multi-carrier modulation such as OFDM modulation, which may maintain good compatibility with the OFDM system, thereby reducing the transmitter complexity introduced by implementing the WUR signal. FIG. 9 is a schematic diagram of an MC-OOK signal generated by a multi-carrier. By mapping the corresponding amplitude values to multiple subcarriers in the frequency domain, a waveform of a time domain signal transferred by inverse discrete Fourier transform (IDFT) approximates a waveform formed by ASK modulation, where bit 1 is represented by a high level of the signal and bit 0 is represented by a low level of the signal.

In some scenarios, it is considered to introduce the following MC-ASK waveform generation mode, where K represents a size of the point number of the IDFT, and N is the number of subcarriers used to transmit the WUS signal.

A first MC-ASK waveform generation mode (denoted as OOK-1): each OFDM symbol carries 1 bit, where a corresponding output OOK signal is 1 in a case where the subcarrier carrying the WUS signal is modulated and then processed by the IDFT, and a corresponding output OOK signal is 0 in a case where the subcarrier carrying the WUS signal is zero power. FIG. 10 illustrates a schematic diagram of a generation process of generating a WUS based on the OOK-1 waveform generation mode.

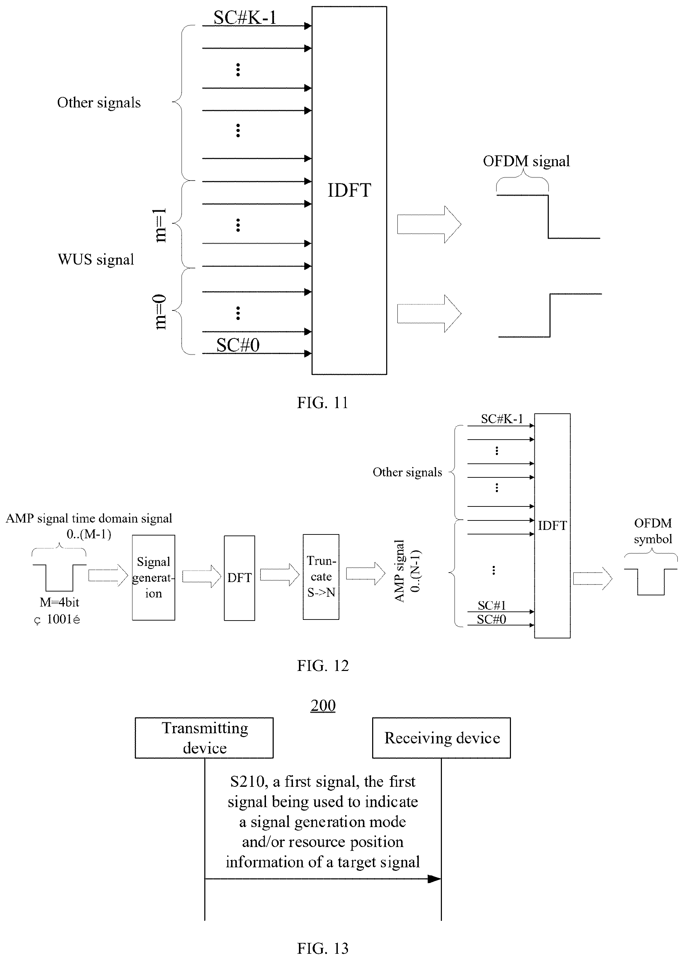

A second MC-ASK waveform generation mode (denoted as OOK-2): each OFDM symbol carries M bits in the frequency domain, and N subcarriers carrying the AMP signal are divided into M segments, each of the segments carries 1 bit of information. In each segment, in a case where all subcarriers are modulated, the corresponding output OOK signal is 1, and in a case where all subcarriers are zero power, the corresponding output OOK signal is 0. FIG. 11 illustrates a schematic diagram of a generation process of generating an AMP signal based on the OOK-2 waveform generation mode when M=2.

A third MC-ASK waveform generation mode (denoted as OOK-3): each OFDM symbol carries 1 bit, and the N subcarriers carrying the AMP signal are divided into M segments. In the M segments, in a case where one subcarrier in each segment is modulated and the other subcarriers are zero power, the corresponding output OOK signal is 1; in a case where all subcarriers in all segments are zero power, the corresponding output OOK signal is 0.

A fourth MC-ASK waveform generation mode (denoted as OOK-4): each OFDM symbol carries M bits in the time domain, and the N subcarriers carrying the AMP signal are generated through discrete Fourier transform (DFT). The M bits are represented by S sampling points. The S sampling points are transformed by the DFT to form S subcarriers. Furthermore, the S subcarriers are truncated and processed to form N subcarriers, which are then transformed by the IDFT, to generate the OOK signal. FIG. 12 illustrates a schematic diagram of a generation process of generating an AMP signal based on the OOK-3 waveform generation mode when M=4.

In addition to the MC-ASK waveform, a multi-carrier frequency shift keying (MC-FSK) waveform may also be used for a low power-wake up signal (LP-WUS). For example, the following MC-FSK waveform generation mode may be used:
A first MC-FSK waveform generation mode (denoted as FSK-1): N subcarriers carrying the AMP signal are divided into M pairs of segments. In each OFDM symbol, one segment in each pair of segments is modulated, and another segment is zero power.

A first MC-FSK waveform generation mode (denoted as FSK-2): the N subcarriers carrying the AMP signal are divided into 2^{M} segments. In each OFDM symbol, one segment of the 2^{M} segments is modulated, and the other segments are zero power.

The bit rates, resource overheads and performances of the above-mentioned different MC-ASK signal generation methods and MC-FSK signal generation methods are different. In practical applications, the transmitting device may flexibly select one of the plurality of signal generation methods according to specific needs. For the receiving device, how to receive the signal is an urgent problem to be solved.

To facilitate the understanding of the technical solutions in the embodiments of the present disclosure, the technical solutions of the present disclosure are described in detail below through specific embodiments. The above related technologies, as optional solutions, may be arbitrarily combined with the technical solutions in the embodiments of the present disclosure, which all fall within the protection scope of the embodiments of the present disclosure. The embodiments of the present disclosure include at least a part of the following contents.

FIG. 13 is a schematic interaction diagram of a wireless communication method 200 according to the embodiments of the present disclosure. As shown in FIG. 13, the method 200 includes at least part of the following contents

S210: a transmitting device transmits a first signal, where the first signal is used to indicate a signal generation mode and/or resource position information of a target signal, and the target signal is a signal transmitted from the transmitting device to a receiving device.

Correspondingly, the receiving device receives the first signal.

Furthermore, the receiving device may determine the signal generation mode and/or the resource position information of the target signal according to the first signal, thereby receiving the target signal in a suitable receiving mode or receiving the target signal at a corresponding resource position.

In some scenarios, denoted as scenario 1, the transmitting device is a network device and the receiving device is an ambient power enabled (AMP) device.

In other scenarios, denoted as scenario 2, the transmitting device is a network device and the receiving device is a traditional terminal.

In some other scenarios, denoted as scenario 3, the transmitting device is a traditional terminal and the receiving device is an AMP device.

In some other scenarios, denoted as scenario 4, the transmitting device is a traditional terminal and the receiving device is a network device.

In some embodiments, the network device may be a base station in a cellular communication system (such as a gNB in an NR system), or may also be an AP in a WIFI system, etc., which is not limited in the present disclosure.

In some embodiments, the traditional terminal may be an existing terminal in the communication system, such as an existing terminal in the cellular communication system, such as a UE in the NR system, or an STA in the WIFI system, etc., which is not limited in the present disclosure.

In the embodiments of the present disclosure, the AMP device is also referred to as an ambient IoT device, an AMP IoT device, a zero power device or a zero power terminal.

It should be noted that in the embodiments of the present disclosure, the naming of the AMP device does not limit the source of its power. For example, the power required for work may come from wireless radio frequency power, light power, solar power, thermal power, mechanical power, etc.

In some embodiments, for the scenario 1, the target signal may be a signal transmitted from the network device to the AMP device, such as an LP-WUS, or may be other signals, such as a data signal or a control signal.

In some embodiments, for the scenario 2, the target signal may be a signal transmitted from the network device to the traditional terminal, such as the LP-WUS.

In some embodiments, for the scenario 3, the target signal may be a signal transmitted from the traditional terminal to the AMP device, such as the data signal or the control signal.

In some embodiments, for the scenario 4, the target signal may be a signal transmitted from the traditional terminal to the network device, such as the data signal or the control signal.

In some embodiments, in a case where the target signal is an LP-WUS, the receiving device has a wake up receiver, and the wake up receiver is used to receive the LP-WUS.

In some embodiments, the first signal is transmitted before the target signal.

That is, the transmitting device may indicate information of a signal transmitted later through a signal transmitted earlier, and further receive the signal transmitted later based on the information.

In some embodiments of the present disclosure, the first signal and the target signal are independent signals.

For example, the first signal and the target signal are adjacent in the time domain, or the first signal and the target signal have a certain time interval in the time domain.

In some embodiments, the target signal includes a preamble portion and a data (payload) portion.

In some other embodiments, the target signal includes a preamble portion, a header portion and a data portion.

In yet other embodiments, the target signal includes a header portion and a data portion.

In some other embodiments of the present disclosure, the first signal and the target signal belong to a second signal, where in the second signal, the first signal is located before the target signal.

In some embodiments, the first signal may be carried in an existing field in a second signal, or a new field for carrying the first signal may be added to the second signal.

In some embodiments, the second signal includes a data portion, the first signal is located before the data portion, and the target signal includes the data portion.

Example 1: the second signal includes a preamble portion, a header portion and a data portion, the preamble portion and the header portion are located before the data portion, the first signal is located in the preamble portion, or the first signal is located in the header (payload) portion, and the target signal includes at least the data portion.

Example 2: the second signal includes a header portion and a data portion, the header portion is located before the data portion, the first signal is located in the header portion, and the target signal includes the data portion.

Example 3: the second signal includes a preamble portion and a data portion, the preamble portion is located before the data portion, the first signal is located in the preamble portion, and the target signal includes the data portion.

Example 4: the second signal includes a first portion, a preamble portion, a header portion and a data portion, the first portion, the preamble portion and the header portion are located before the data portion, the first signal is located in the first portion, and the target signal includes at least the data portion but does not include the first portion.

Example 5: the second signal includes a first portion, a preamble portion and a data portion, the first portion and the preamble portion are located before the data portion, the first signal is located in the first portion, and the target signal includes at least the data portion but does not include the first portion.

Example 6: the second signal includes a first portion, a header portion and a data portion, the first portion and the header portion are located before the data portion, the first signal is located in the first portion, and the target signal includes at least the data portion but does not include the first portion.

Optionally, the first portion may be a portion of the second signal dedicated to carrying the first signal.

In some embodiments, the first signal is used to explicitly indicate the signal generation mode and/or the resource position information of the target signal, or may also implicitly indicate the signal generation mode and/or the resource position information of the target signal. For example, a signal generation mode of the first signal and a signal generation mode of the target signal are the same, or a resource position of the first signal and a resource position of the target signal have an associated relationship, etc. The present disclosure does not limit the specific indication mode.

In some embodiments, the first signal being used to indicate the signal generation mode of the target signal, may include:
the first signal being used to indicate a specific signal generation mode of the target signal, and/or a signal generation parameter corresponding to the target signal.

In some embodiments, the first signal being used to indicate the resource position information of the target signal, may include:
the first signal being used to indicate information of subcarriers occupied by the target signal, such as the number and/or positions of the subcarriers.

In the following, a relationship between a resource position of the first signal and a resource position of the target signal is described in combination with Embodiment 1 and Embodiment 2.

Embodiment 1: a resource position of the first signal and a resource position of the target signal have an associated relationship

Optionally, the associated relationship may be predefined, or preconfigured by the transmitting device, or indicated by the transmitting device in the first signal.

Case 1: the receiving device may know the resource position of the first signal in advance

For example, the resource position of the first signal is predefined, or preconfigured by the transmitting device.

Optionally, the resource position of the first signal may include: the number and/or positions of subcarriers occupied by the first signal.

For example, the receiving device may know the number and/or positions of subcarriers occupied by the first signal in advance, and the receiving device may receive the first signal at the corresponding resource position.

In some embodiments, the receiving device may determine the resource position of the target signal according to the pre-known resource position of the first signal and in combination with the associated relationship between the resource position of the first signal and the resource position of the target signal.

Case 2: the receiving device may know the resource position of the target signal in advance

For example, the resource position of the target signal is predefined, or preconfigured by the transmitting device.

Optionally, the resource position of the target signal may include: the number and/or positions of subcarriers occupied by the target signal.

In some embodiments, the receiving device may determine the resource position of the first signal according to the pre-known resource position of the target signal and in combination with the associated relationship between the resource position of the first signal and the resource position of the target signal, and further receive the first signal at the corresponding resource position.

In some embodiments, the resource position of the first signal and the resource position of the target signal having the associated relationship, may include:
a time domain resource of the first signal and a time domain resource of the target signal having an associated relationship; and/or
a frequency domain resource of the first signal and a frequency domain resource of the target signal having an associated relationship.

In some embodiments, the time domain resource of the first signal and the time domain resource of the target signal having an associated relationship, may include:
the time domain resource of the first signal being adjacent to or having a certain time interval with the time domain resource of the target signal.

Optionally, the time interval may be predefined, or configured by the transmitting device.

In some embodiments, the frequency domain resource of the first signal and the frequency domain resource of the target signal having an associated relationship, may include:
the frequency domain resource occupied by the target signal being the same as the frequency domain resource occupied by the first signal, or the frequency domain resource occupied by the first signal being a part of the frequency domain resource occupied by the target signal.

In some embodiments, the frequency domain resource of the first signal may include subcarriers occupied by the first signal, or subcarriers used to carry the first signal, and the frequency domain resource of the target signal may include subcarriers occupied by the target signal, or subcarriers used to carry the target signal.

The following describes the associated relationship between the frequency domain resource of the first signal and the frequency domain resource of the target signal in combination with Embodiment 1-1 to Embodiment 1-3.

Embodiment 1-1: subcarriers used to carry the first signal are the same as subcarriers used to carry the target signal.

That is, no matter which signal generation mode the target signal uses, the subcarriers occupied by the first signal and the subcarriersr occupied by the target signal are the same.

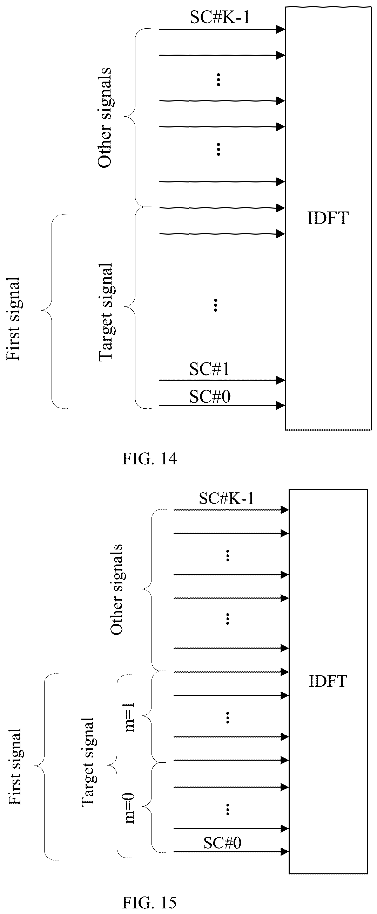

In some specific embodiments, as shown in FIG. 14, the target signal is generated based on the first MC-ASK waveform generation mode, and the target signal is carried by N subcarriers (i.e., SC#0 to SC#N-1), and the subcarriers occupied by the first signal are the same as the subcarriers occupied by the target signal.

In other specific embodiments, as shown in FIG. 15, the target signal is generated based on the second MC-ASK waveform generation mode, and the target signal is carried by N subcarriers (i.e., SC#0 to SC#N-1). The N subcarriers are divided into 2 (i.e., M=2) segments, and the subcarriers occupied by the first signal are the same as the subcarriers occupied by the target signal.

Embodiment 1-2: the subcarriers used to carry the first signal are the same as subcarriers corresponding to one or more segments of N segments, and the N segments are all segments corresponding to N subcarriers used to carry the target signal, and N is a positive integer.

In the Embodiment 1-2, the N subcarriers used to carry the target signal are divided into M segments, and the first signal occupies subcarriers corresponding to X segments in the M segments, and X is a positive integer and X<M.

Optionally, the X segments may be the first X segments, or the last X segments, or the middle X segments of the M segments.

Optionally, positions of the X segments in the M segments may be predefined, or configured by the transmitting device.

Optionally, the associated relationship between the resource position of the first signal and the resource position of the target signal may include:
position information of the X segments in the M segments.

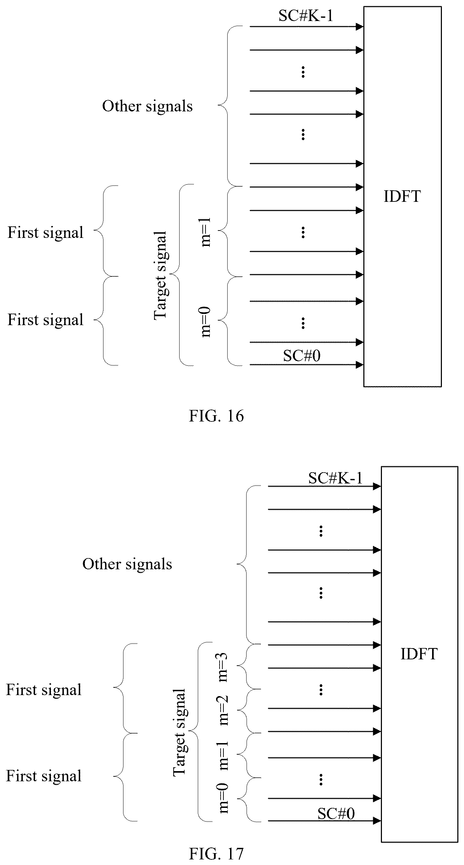

In some specific embodiments, as shown in FIG. 16, the target signal is generated based on the second MC-ASK waveform generation mode, and the target signal is carried by N subcarriers (i.e., SC#0 to SC#N-1), and the N subcarriers are divided into 2 (i.e., M=2) segments. The first signal occupies subcarriers corresponding to a first segment (i.e., a segment corresponding to m=0) of the two segments, or may occupy subcarriers corresponding to a second segment (i.e., a segment corresponding to m=1) of the two segments, or may transmit the first signal on both subcarriers corresponding to the two segments.

In other specific embodiments, as shown in FIG. 17, the target signal is generated based on the second MC-ASK waveform generation mode, and the target signal is carried by N subcarriers (i.e., SC#0 to SC#N-1), and the N subcarriers are divided into 4 (i.e., M=4) segments, and the first signal occupies subcarriers corresponding to the first two segments (i.e., segments corresponding to m=0 and m=1) of the 4 segments, or, it may occupy subcarriers corresponding to the last two segments (i.e., segments corresponding to m=2 and m=3) of the 4 segments, or, it may occupy subcarriers corresponding to the middle two segments (i.e., segments corresponding to m=1 and m=2) of the 4 segments.

Embodiment 1-3: subcarriers used to carry the first signal are the same as Y subcarriers in the N subcarriers used to carry the target signal, where N is a positive integer, Y is a positive integer, and Y<N.

That is, in the Embodiment 1-3, the subcarriers corresponding to the first signal are part of the N subcarriers corresponding to the target signal. The part of subcarriers may be independent of the number of segments of the N subcarriers corresponding to the target signal.

Optionally, positions of the Y subcarriers in the N subcarriers may be predefined, or may be configured by the transmitting device.

In some embodiments, the Y subcarriers are the center Y subcarriers in the N subcarriers, or the first Y subcarriers, or the last Y subcarriers in the N subcarriers.

Optionally, the associated relationship between the resource position of the first signal and the resource position of the target signal may include:
position information of the Y subcarriers in the N subcarriers.

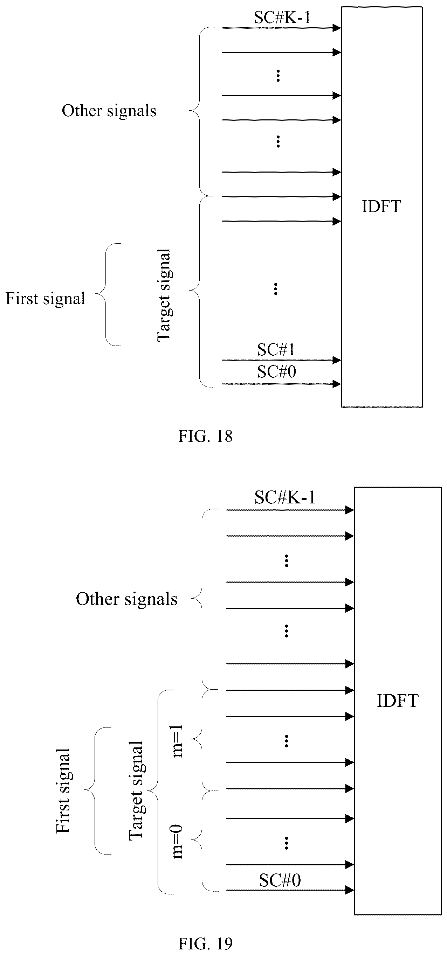

In some specific embodiments, as shown in FIG. 18, the target signal is generated based on the first MC-ASK waveform generation mode, the target signal is carried by N subcarriers (i.e., SC#0 to SC#N-1), and the first signal occupies part of the N subcarriers.

In other specific embodiments, as shown in FIG. 19, the target signal is generated based on the second MC-ASK waveform generation method, and the target signal is carried by N subcarriers (i.e., SC#0 to SC#N-1). The N subcarriers are divided into 2 (i.e., M=2) segments, and the first signal occupies part of the N subcarriers.

Embodiment 2: the resource position of the first signal and the resource position of the target signal do not have an associated relationship, or in other words, the resource position of the first signal is independent of the resource position of the target signal.

In the Embodiment 2, the receiving device may know the resource position of the first signal in advance, and then the receiving device may receive the first signal at the corresponding resource position.

For example, the resource position of the first signal is predefined, or preconfigured by the transmitting device.

In some embodiments, the receiving device may receive the first signal according to the pre-known resource position of the first signal, the first signal may indicate the resource position of the target signal, and then the receiving device may obtain the resource position of the target signal according to the indication in the first signal.

In some embodiments, the resource position of the first signal and the resource position of the target signal not having an associated relationship, may include:
subcarriers used to carry the first signal and subcarriers used to carry the target signal not overlapping, or partially overlapping.

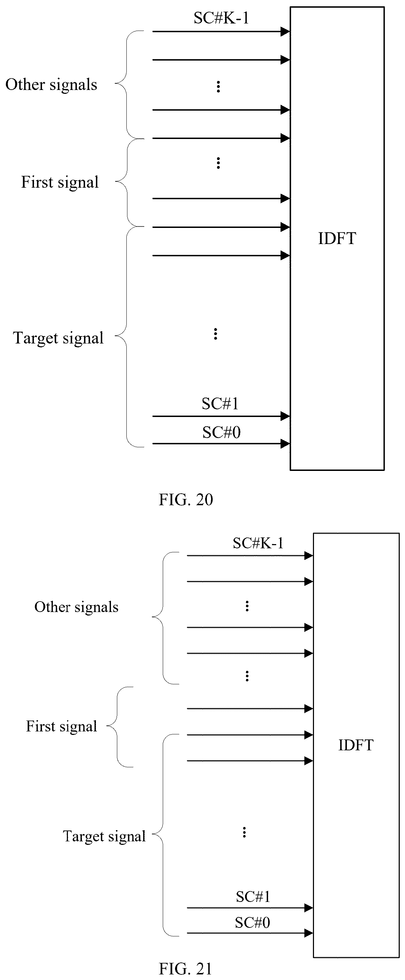

In some specific embodiments, as shown in FIG. 20, the target signal is generated based on the first MC-ASK waveform generation mode, and the target signal is carried by N subcarriers (i.e., SC#0 to SC#N-1), and subcarriers occupied by the first signal and subcarriers occupied by the target signal do not overlap.

In other specific embodiments, as shown in FIG. 21, the target signal is generated based on the first MC-ASK waveform generation method, and the target signal is carried by N subcarriers (i.e., SC#0 to SC#N-1), and subcarriers occupied by the first signal and subcarriers occupied by the target signal partially overlap.

In some embodiments of the present disclosure, as shown in FIG. 14 to FIG. 21, the target signal and other signals are multiplexed within a frequency band, where the other signals may refer to existing signals or channels in the communication system, or legacy signals or channels, and for example, legacy signals or channels in the NR system, or existing signals or frames in the WIFI system, etc.

In some embodiments, the signal generation mode of the first signal may be a MC-ASK waveform generation mode, such as the aforementioned first MC-ASK waveform generation mode, the second MC-ASK waveform generation mode, the third MC-ASK waveform generation mode, the fourth MC-ASK waveform generation mode, or other MC-ASK waveform generation modes.

In other embodiments, the signal generation mode of the first signal may be an MC-FSK waveform generation mode, such as the aforementioned first MC-FSK waveform generation mode, the second MC-FSK waveform generation mode, or other MC-FSK waveform generation modes.

In some embodiments, a signal generation mode of the first signal is the same as a signal generation mode of the target signal.

For example, the MC-ASK waveform generation mode or the MC-FSK waveform generation mode is used for both the first signal and the target signal.

As an example, the first MC-ASK waveform generation mode, the second MC-ASK waveform generation mode, the third MC-ASK waveform generation mode, or the fourth MC-ASK waveform generation mode, or the first MC-FSK waveform generation mode or the second MC-FSK waveform generation mode, etc., is used for both the first signal and the target signal.

It should be understood that when the signal generation modes of the first signal and the target signal are the same, the same signal generation parameters, or different signal generation parameters may be used for the first signal and the target signal. For example, when the second MC-ASK waveform generation mode, the third MC-ASK waveform generation mode or the MC-FSK waveform generation mode is used for both the first signal and the target signal, different segment numbers M are used, or when the fourth MC-ASK waveform generation mode is used, different S, M or N parameters are used.

In some embodiments, the signal generation mode of the first signal and the signal generation mode of the target signal are independent, for example, they are different.

For example, the MC-ASK waveform generation mode is used for the first signal, and the MC-FSK waveform generation mode is used for the target signal.

As a specific example, the first MC-ASK waveform generation mode is used for the first signal, the second MC-FSK waveform generation mode is used for the target signal, etc.

As another specific example, the first MC-ASK waveform generation mode is used for the first signal, the second MC-ASK waveform generation mode is used for the target signal, etc.

In some embodiments, the signal generation mode of the first signal is predefined, or preconfigured by the transmitting device.

That is, the receiving device may know the signal generation method of the first signal in advance, so that the receiving device may receive the first signal in a suitable receiving mode, and further determine the signal generation mode and/or the resource position of the target signal based on the first signal.

In some embodiments, the first signal may include first indication information, used to indicate information related to a resource position of the target signal and/or a signal generation mode of the target signal. That is, the first signal may explicitly indicate information related to the resource position of the target signal and/or the signal generation mode of the target signal.

In some embodiments, the first indication information is used to indicate at least one of:
a signal generation mode of the target signal;
a signal generation parameter corresponding to the target signal; or
subcarrier information corresponding to the target signal.

In some embodiments, the signal generation mode of the target signal may be the MC-ASK waveform generation mode, such as the aforementioned first MC-ASK waveform generation mode, the second MC-ASK waveform generation mode, the third MC-ASK waveform generation mode, the fourth MC-ASK waveform generation mode, or other MC-ASK waveform generation modes.

In other embodiments, the signal generation mode of the target signal may be the MC-FSK waveform generation mode, such as the aforementioned first MC-FSK waveform generation mode, the second MC-FSK waveform generation mode, or other MC-FSK waveform generation modes.

It should be understood that the above signal generation modes are only examples, and other waveform generation modes based on multi-carrier may also be used for the target signal, which is not limited in the present disclosure.

In some embodiments, the signal generation parameter corresponding to the target signal includes at least one of:
a modulation mode used to generate the target signal, such as ASK (e.g., OOK) or FSK, etc.;
a number of segments of N subcarriers used to carry the target signal, N being a positive integer;
a number of subcarriers included in a segment;
a bit carrying mode in a segment;
a number of bits carried by an orthogonal frequency-division multiplexing (OFDM) symbol;
guard band information between segments;
subcarrier spacing corresponding to the target signal;
a position of a modulated subcarrier in a segment; or
a cyclic prefix (CP) length of an OFDM symbol.

In some embodiments, for the OOK modulation mode, the number of segments of the N subcarriers used to carry the target signal is greater than or equal to 1.

In some embodiments, for the FSK modulation mode, the number of segments of the N subcarriers used to carry the target signal is M pairs or 2^{M}.

In some embodiments, for the OOK modulation mode, the bit carrying mode in the segment may refer to:
different segments carrying different information, such as the second MC-ASK waveform generation mode; or,
different segments carry the same information, such as the third MC-ASK waveform generation mode.

In some embodiments, for the FSK modulation mode, the bit carrying mode in the segment may refer to:
each pair of segments carrying 0 and 1 respectively, such as the first MC-FSK waveform generation mode; or,
one segment carrying 0, and the other segments carrying 0, such as the second MC-FSK waveform generation mode.

In some embodiments, for the first MC-ASK waveform generation mode and the third MC-ASK waveform generation mode, the number of bits carried by an OFDM symbol is 1, and for the second MC-ASK waveform generation mode and the fourth MC-ASK waveform generation mode, the number of bits carried by an OFDM symbol is M.

In some embodiments, for the fourth MC-FSK waveform generation mode, the signal generation parameter corresponding to the target signal may further include the number S of sampling points and the number N of subcarriers.

In some embodiments, the guard band information between segments may include: whether there is a guard band between segments, and/or guard band size information.

In some embodiments, the subcarrier spacing corresponding to the target signal may be the same as or may be different from the subcarrier spacing corresponding to other signals multiplexed in the frequency band.

In some embodiments, for the third MC-ASK waveform generation mode, when each segment carries 1 bit, the position of the modulated subcarrier in a segment may refer to: the position of the modulated subcarrier in a segment, within the segment.

In some embodiments, if there are a plurality of CP lengths, the transmitting device may indicate a target CP length corresponding to an OFDM symbol through a first signal.

In some embodiments, the subcarrier information corresponding to the target signal includes: position information and/or quantity information of subcarriers used to carry the target signal. For example, when the resource position of the target signal and the resource position of the first signal do not have an associated relationship (e.g., do not overlap or partially overlap), positions of N subcarriers corresponding to the target signal may be indicated by the first signal.

In some embodiments of the present disclosure, the method 200 further includes:
transmitting the target signal, by the transmitting device using the signal generation mode and/or the resource position of the target signal indicated by the first signal.

Correspondingly, the receiving device receives the target signal according to the signal generation mode and/or the resource position indicated by the first signal, thereby ensuring that the receiving device correctly demodulates the target signal, and ensuring the reception performance of the target signal.

In summary, in the embodiments of the present disclosure, the transmitting device may flexibly select the signal generation mode of the target signal as needed, and further indicate the signal generation mode and/or the resource position information of the target signal to the receiving device through a first signal. In this way, the receiving device may receive the target signal according to the signal generation mode and/or the resource position information indicated by the first signal, thereby ensuring that the receiving device correctly demodulates the target signal, and ensuring the reception performance of the target signal.

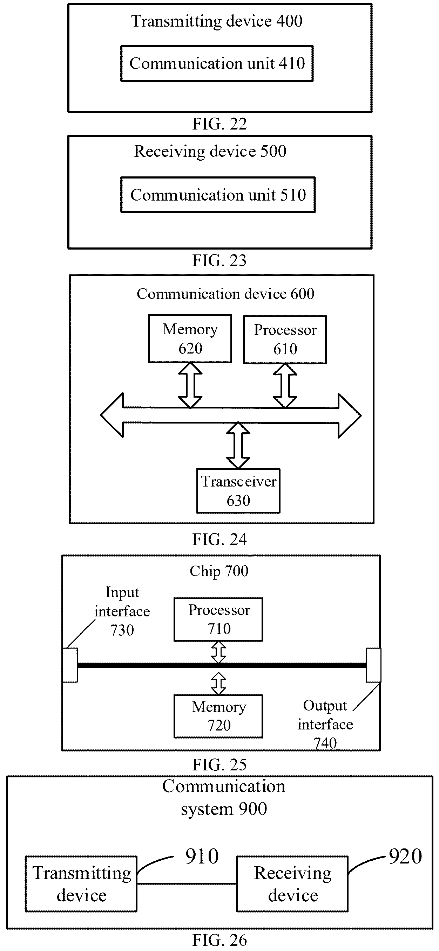

The above, in combination with FIG. 13 to FIG. 21, describes the method embodiments of the present disclosure in detail. The following, in combination with FIG. 22 to FIG. 26, describes apparatus embodiments of the present disclosure in detail. It should be understood that the apparatus embodiments and the method embodiments correspond to each other, and similar descriptions may refer to the method embodiments.

FIG. 22 shows a schematic block diagram of a transmitting device 400 according to the embodiments of the present disclosure. As shown in FIG. 22, the transmitting device 400 includes:
a communication unit 410, configured to transmit a first signal to a receiving device, where the first signal is used to indicate a signal generation mode and/or resource position information of a target signal, and the target signal is a signal transmitted from the transmitting device to the receiving device.

In some embodiments, the target signal includes a low power-wake up signal (LP-WUS).

In some embodiments, the transmitting device is a network device, and the receiving device is a traditional terminal or an ambient power enabled (AMP) device; or, the transmitting device is a traditional terminal, and the receiving device is an ambient power enabled (AMP) device or a network device.

In some embodiments, the first signal is transmitted before the target signal.

In some embodiments, the first signal and the target signal are independent signals.

In some embodiments, the target signal includes a preamble portion and a data portion; or
the target signal includes a preamble portion, a header portion and a data portion; or
the target signal includes a header portion and a data portion.

In some embodiments, the first signal and the target signal belong to a second signal, where in the second signal, the first signal is located before the target signal.

In some embodiments, the second signal includes a data portion, the first signal is located before the data portion, and the target signal includes the data portion.

In some embodiments, the second signal further includes a preamble portion and a header portion, the preamble portion and the header portion are located before the data portion, the first signal is located in the preamble portion, or the first signal is located in the header portion, and the target signal includes the data portion.

In some embodiments, the second signal further includes a header portion, the header portion is located before the data portion, the first signal is located in the header portion, and the target signal includes the data portion.

In some embodiments, the second signal further includes a preamble portion, the preamble portion is located before the data portion, the first signal is located in the preamble portion, and the target signal includes the data portion.

In some embodiments, a subcarrier used to carry the first signal is the same as a subcarrier used to carry the target signal.

In some embodiments, a subcarrier used to carry the first signal is the same as a subcarrier corresponding to one or more segments of N segments, and the N segments are all segments corresponding to N subcarriers used to carry the target signal, and N is a positive integer.

In some embodiments, a subcarrier used to carry the first signal is the same as some of N subcarriers used to carry the target signal, and N is a positive integer.

In some embodiments, a subcarrier used to carry the first signal and a subcarrier used to carry the target signal do not overlap, or partially overlap.

In some embodiments, a signal generation mode of the first signal is the same as the signal generation mode of the target signal.

In some embodiments, a signal generation mode of the first signal is predefined, or configured by the transmitting device.

In some embodiments, the first signal includes first indication information, and the first indication information is used to indicate at least one of:
the signal generation mode of the target signal;
a signal generation parameter corresponding to the target signal; or
subcarrier information corresponding to the target signal.

In some embodiments, the signal generation parameter corresponding to the target signal includes at least one of:
a modulation mode used to generate the target signal;
a number of segments of N subcarriers used to carry the target signal, N being a positive integer;
a number of subcarriers included in a segment;
a bit carrying mode in a segment;
a number of bits carried by an orthogonal frequency division multiplexing (OFDM) symbol;
guard band information between segments;
subcarrier spacing corresponding to the target signal;
a position of a modulated subcarrier in a segment; or
a cyclic prefix (CP) length of an OFDM symbol.

In some embodiments, the subcarrier information corresponding to the target signal includes:
position information and/or quantity information of subcarriers used to carry the target signal.

Optionally, in some embodiments, the above communication unit may be a communication interface or a transceiver, or an input/output interface of a communication chip or a system on chip.

It should be understood that the transmitting device 400 according to the embodiments of the present disclosure may correspond to the transmitting device in the method embodiments of the present disclosure, and the above-mentioned and other operations and/or functions of each unit in the transmitting device 400 are respectively for realizing the corresponding procedures of the transmitting device in the method shown in FIG. 13 to FIG. 21, which will not be repeated here for the sake of brevity.

FIG. 23 shows a schematic block diagram of a receiving device 500 according to thr embodiments of the present disclosure. As shown in FIG. 23, the receiving device 500 includes:
a communication unit 510, configured to receive a first signal transmitted from a transmitting device, where the first signal is used to indicate a signal generation mode and/or resource position information of a target signal, and the target signal is a signal transmitted from the transmitting device to the receiving device.

In some embodiments, the target signal includes a low power-wake up signal (LP-WUS).

In some embodiments, the transmitting device is a network device, and the receiving device is a traditional terminal or an ambient power enabled (AMP) device; or, the transmitting device is a traditional terminal, and the receiving device is an ambient power enabled (AMP) device or a network device.

In some embodiments, the first signal is transmitted before the target signal.

In some embodiments, the first signal and the target signal are independent signals.

In some embodiments, the target signal includes a preamble portion and a data portion; or
the target signal includes a preamble portion, a header portion and a data portion; or
the target signal includes a header portion and a data portion.

In some embodiments, the first signal and the target signal belong to a second signal, where in the second signal, the first signal is located before the target signal.

In some embodiments, the second signal includes a data portion, the first signal is located before the data portion, and the target signal includes the data portion.

In some embodiments, the second signal further includes a preamble portion and a header portion, the preamble portion and the header portion are located before the data portion, the first signal is located in the preamble portion, or the first signal is located in the header portion, and the target signal includes the data portion.

In some embodiments, the second signal further includes a header portion, the header portion is located before the data portion, the first signal is located in the header portion, and the target signal includes the data portion.

In some embodiments, the second signal further includes a preamble portion, the preamble portion is located before the data portion, the first signal is located in the preamble portion, and the target signal includes the data portion.

In some embodiments, a subcarrier used to carry the first signal is the same as a subcarrier used to carry the target signal.

In some embodiments, a subcarrier used to carry the first signal is the same as a subcarrier corresponding to one or more segments of N segments, and the N segments are all segments corresponding to N subcarriers used to carry the target signal, and N is a positive integer.

In some embodiments, a subcarrier used to carry the first signal is the same as some of N subcarriers used to carry the target signal, and N is a positive integer.

In some embodiments, a subcarrier used to carry the first signal and a subcarrier used to carry the target signal do not overlap, or partially overlap.

In some embodiments, a signal generation mode of the first signal is the same as the signal generation mode of the target signal.

In some embodiments, a signal generation mode of the first signal is predefined, or configured by the transmitting device.

In some embodiments, the first signal includes first indication information, and the first indication information is used to indicate at least one of:
the signal generation mode of the target signal;
a signal generation parameter corresponding to the target signal; or
subcarrier information corresponding to the target signal.

In some embodiments, the signal generation parameter corresponding to the target signal includes at least one of:
a modulation mode used to generate the target signal;
a number of segments of N subcarriers used to carry the target signal, N being a positive integer;
a number of subcarriers included in a segment;
a bit carrying mode in a segment;
a number of bits carried by an orthogonal frequency division multiplexing (OFDM) symbol;
guard band information between segments;
subcarrier spacing corresponding to the target signal;
a position of a modulated subcarrier in a segment; or
a cyclic prefix (CP) length of an OFDM symbol.

In some embodiments, the subcarrier information corresponding to the target signal includes:
position information and/or quantity information of subcarriers used to carry the target signal.

Optionally, in some embodiments, the above communication unit may be a communication interface or a transceiver, or an input/output interface of a communication chip or a system on chip. The processing unit may be one or more processors.

It should be understood that the receiving device 500 according to the embodiments of the present disclosure may correspond to the receiving device in the method embodiments of the present disclosure, and the above-mentioned and other operations and/or functions of each unit in the receiving device 500 are respectively for implementing the corresponding procedures of the receiving device in the methods shown in FIG. 13 to FIG. 21, which will not be repeated here for the sake of brevity.

FIG. 24 is a schematic structural diagram of a communication device 600 provided in the embodiments of the present disclosure. The communication device 600 shown in FIG. 24 includes a processor 610, and the processor 610 may call and run a computer program from a memory to implement the method in the embodiments of the present disclosure.

Optionally, as shown in FIG. 24, the communication device 600 may further include a memory 620. The processor 610 may call and run a computer program from the memory 620, to implement the method in the embodiments of the present disclosure.

The memory 620 may be a separate device independent from the processor 610, or may be integrated into the processor 610.

Optionally, as shown in FIG. 24, the communication device 600 may further include a transceiver 630. The processor 610 may control the transceiver 630 to communicate with other devices, and specifically, to transmit information or data to other devices, or receive information or data transmitted by other devices.

Here, the transceiver 630 may include a transmitter and a receiver. The transceiver 630 may further include an antenna (antennas), and the number of antennas may be one or more.

Optionally, the communication device 600 may specifically be the transmitting device of the embodiments of the present disclosure, and the communication device 600 may implement corresponding procedures implemented by the transmitting device in the various methods of the embodiments of the present disclosure, which will not be repeated here for the sake of brevity.

Optionally, the communication device 600 may specifically be the receiving device of the embodiments of the present disclosure, and the communication device 600 may implement the corresponding procedures implemented by the receiving device in the various methods of the embodiments of the present disclosure, which will not be repeated here for the sake of brevity.

FIG. 25 is a schematic structural diagram of a chip in the embodiments of the present disclosure. The chip 700 shown in FIG. 25 includes a processor 710, the processor 710 may call and run a computer program from a memory to implement the method in the embodiments of the present disclosure.

Optionally, as shown in FIG. 25, the chip 700 may further include a memory 720. The processor 710 may call and run a computer program from the memory 720 to implement the method in the embodiments of the present disclosure.

The memory 720 may be a separate device independent of the processor 710, or may be integrated into the processor 710.

Optionally, the chip 700 may further include an input interface 730. The processor 710 may control the input interface 730 to communicate with other devices or chips, and specifically, to acquire information or data transmitted from other devices or chips.

Optionally, the chip 700 may further include an output interface 740. The processor 710 may control the output interface 740 to communicate with other devices or chips, and specifically, to output information or data to other devices or chips.

Optionally, the chip may be applied to the transmitting device in the embodiments of the present disclosure, and the chip may implement the corresponding procedures implemented by the transmitting device in the various methods of the embodiments of the present disclosure, which will not be repeated here for the sake of brevity.

Optionally, the chip may be applied to the receiving device in the embodiments of the present disclosure, and the chip may implement the corresponding procedures implemented by the receiving device in the various methods of the embodiments of the present disclosure, which will not be repeated here for the sake of brevity.

It should be understood that the chip mentioned in the embodiments of the present disclosure may also be called a system on chip, a system chip, a chip system or a system-on-chip chip, etc.

FIG. 26 is a schematic block diagram of a communication system 900 provided in the embodiments of the present disclosure. As shown in FIG. 26, the communication system 900 includes a transmitting device 910 and a receiving device 920.

The transmitting device 910 may be used to implement the corresponding functions implemented by the transmitting device in the above method, and the receiving device 920 may be used to implement the corresponding functions implemented by the receiving device in the above method, which will not be repeated here for the sake of brevity.

It should be understood that the processor in the embodiments of the present disclosure may be an integrated circuit chip and have a processing capability of signals. In the implementation process, various steps of the above method embodiments may be completed by an integrated logic circuit of hardware in the processor or an instruction in a software form. The above processor may be a general-purpose processor, a Digital Signal Processor (DSP), an Application Specific Integrated Circuit (ASIC), a Field Programmable Gate Array (FPGA) or other programmable logic devices, a discrete gate or transistor logic device, a discrete hardware component. Various methods, steps and logical block diagrams disclosed in the embodiments of the present disclosure may be implemented or performed. A general-purpose processor may be a microprocessor, or the processor may also be any conventional processor, etc. The steps of the method disclosed in combination with the embodiments of the present disclosure may be directly embodied as being performed and completed by a hardware decoding processor, or by using a combination of hardware and software modules in the decoding processor. The software module may be located in the mature storage medium in the art such as the random memory, the flash memory, the read-only memory, the programmable read-only memory or electrically erasable programmable memory, the register. The storage medium is located in the memory, and the processor reads the information in the memory and completes the steps of the above methods in combination with its hardware.

It may be understood that, the memory in the embodiments of the present disclosure may be a volatile memory or a non-volatile memory, or may include both volatile and non-volatile memories. Herein, the non-volatile memory may be a Read-Only Memory (ROM), a programmable read-only memory (Programmable ROM, PROM), an erasable programmable read-only memory (Erasable PROM, EPROM), an electrically erasable programmable read-only memory (Electrically EPROM, EEPROM) or a flash memory. The volatile memory may be a Random Access Memory (RAM), which is used as an external cache. Through illustrative, rather than limiting, illustration, many forms of RAMs are available, for example, a static random access memory (Static RAM, SRAM), a dynamic random access memory (Dynamic RAM, DRAM), a synchronous dynamic random access memory (Synchronous DRAM, SDRAM), a double data rate synchronous dynamic random access memory (Double Data Rate SDRAM, DDR SDRAM), an enhanced synchronous dynamic random access memory (Enhanced SDRAM, ESDRAM), a synchronous link dynamic random access memory (Synchlink DRAM, SLDRAM) and a direct rambus random access memory (Direct Rambus RAM, DR RAM). It should be noted that the memory of the system and the method described herein is intended to include, but not limited to, these and any other suitable types of memories.

It should be understood that the above memory is exemplary but not limiting illustration, e.g., the memory in embodiments of the present disclosure may also be a static Random Access Memory (static RAM, SRAM), a Dynamic Random Access Memory (dynamic RAM, DRAM), a synchronous DRAM (SDRAM), a double data rate SDRAM (DDR SDRAM), an enhanced SDRAM (ESDRAM), a synch link DRAM (SLDRAM), and a Direct Rambus RAM (DR RAM), etc. That is, the memory in the embodiments of the present disclosure is intended to include, but not limited to, these and any other suitable types of memories.

The embodiments of the present disclosure further provide a computer-readable storage medium for storing a computer program.

Optionally, the computer-readable storage medium may be applied to the transmitting device in the embodiments of the present disclosure, and the computer program causes a computer to perform the corresponding procedure implemented by the transmitting device in the various methods of the embodiments of the present disclosure, which will not be repeated here for the sake of brevity.

Optionally, the computer-readable storage medium may be applied to the receiving device in the embodiments of the present disclosure, and the computer program causes a computer to perform the corresponding procedure implemented by the receiving device in various methods of the embodiments of the present disclosure, which will not be repeated here for the sake of brevity.

The embodiments of the present disclosure further provide a computer program product including computer program instructions.

Optionally, the computer program product may be applied to the transmitting device in the embodiments of the present disclosure, and the computer program instructions cause a computer to perform the corresponding procedure implemented by the transmitting device in the various methods of the embodiments of the present disclosure, which will not be repeated here for the sake of brevity.

Optionally, the computer program product may be applied to the receiving device in the embodiments of the present disclosure, and the computer program instruction causes a computer to perform the corresponding procedure implemented by the receiving device in various methods of the embodiments of the present disclosure, which will not be repeated here for the sake of brevity.

The embodiments of the present disclosure further provide a computer program.

Optionally, the computer program may be applied to the transmitting device in the embodiments of the present disclosure, the computer program when being executed on a computer, causes the computer to perform the corresponding procedure implemented by the transmitting device in various methods of the embodiments of the present disclosure, which will not be repeated here for the sake of brevity.

Optionally, the computer program may be applied to the receiving device in the embodiments of the present disclosure, the computer program when being executed on a computer, causes the computer to perform the corresponding procedure implemented by the receiving device in various methods of the embodiments of the present disclosure, which will not be repeated here for the sake of brevity.

Those ordinary skilled in the art may realize that units and algorithm steps of the examples described in combination with the embodiments disclosed herein can be implemented in electronic hardware or in a combination of computer software and electronic hardware. Whether these functions are performed by way of hardware or software depends on a specific application and a design constraint of the technical solution. A skilled person may use different methods for each specific application, to implement the described functions, but such implementation should not be considered beyond the scope of the present disclosure.

It may be clearly understood by those skilled in the art that, for convenience and brevity of the description, the specific working procedures of the system, the apparatus and the unit described above may refer to the corresponding procedures in the above method embodiments, which will not be repeated here.

In the several embodiments provided by the present disclosure, it should be understood that, the disclosed systems, apparatus, and method may be implemented in other ways. For example, the apparatus embodiments described above are only schematic, for example, division of the units is only division of logical functions, and there may be other division methods in an actual implementation, for example, a plurality of units or components may be combined or integrated into another system, or some features may be ignored or not performed. On the other hand, the coupling or direct coupling or communicative connection between each other as shown or discussed may be indirect coupling or communicative connection of apparatus or units via some interfaces, which may be electrical, mechanical, or in other forms.

The units illustrated as separate components may be or may not be physically separated, and the components shown as units may be or may not be physical units, that is, they may be located in one place, or may be distributed onto a plurality of network units. A part or all of the units may be selected according to actual needs, to implement the purpose of the schemes of the embodiments.

In addition, the various functional units in the various embodiments of the present disclosure may be integrated into one processing unit, or the various units may exist physically separately, or two or more units may be integrated into one unit.

If the described functions are implemented in the form of a software functional unit and sold or used as an independent product, they may be stored in a computer-readable storage medium. Based on this understanding, the technical solutions of the present disclosure essentially, or a part of the technical solutions that contributes to the prior art, or a part of the technical solutions, may be embodied in the form of a software product, and the computer software product is stored in a storage medium, and includes a plurality of instructions for enabling a computer device (which may be a personal computer, a server, or a network device, etc.) to perform all or some of steps of the methods described in the various embodiments of the present disclosure. And, the storage medium mentioned above includes a USB flash drive (U disk), a mobile hard disk, a Read-Only Memory (ROM), a Random Access Memory (RAM), a diskette, or an optical disk, and various media that may store program codes.

The above content is only specific implementations of the present disclosure, but the protection scope of the present disclosure is not limited thereto, and any skilled familiar with this technical field may easily think of changes or substitutions within the technical scope disclosed in the present disclosure, which should be all covered within the protection scope of the present disclosure. Therefore, the protection scope of the present disclosure should be determined based on the protection scope of the claims.

## Claims

1. A wireless communication method, comprising:
transmitting, by a transmitting device, a first signal to a receiving device, wherein the first signal is used to indicate a signal generation mode and/or resource position information of a target signal, and the target signal is a signal transmitted from the transmitting device to the receiving device.

2. The method according to claim 1, wherein the target signal comprises a low power-wake up signal (LP-WUS).

3. The method according to claim 1 or 2, wherein
the transmitting device is a network device, and the receiving device is a traditional terminal or an ambient power enabled (AMP) device; or
the transmitting device is a traditional terminal, and the receiving device is an ambient power enabled (AMP) device or a network device.

4. The method according to any one of claims 1 to 3, wherein the first signal is transmitted before the target signal.

5. The method according to claim 4, wherein the first signal and the target signal are independent signals.

6. The method according to claim 5, wherein
the target signal comprises a preamble portion and a data portion; or
the target signal comprises a preamble portion, a header portion and a data portion; or
the target signal comprises a header portion and a data portion.

7. The method according to claim 4, wherein the first signal and the target signal belong to a second signal, wherein in the second signal, the first signal is located before the target signal.

8. The method according to claim 7, wherein the second signal comprises a data portion, the first signal is located before the data portion, and the target signal comprises the data portion.

9. The method according to claim 8, wherein the second signal further comprises a preamble portion and a header portion, the preamble portion and the header portion are located before the data portion, the first signal is located in the preamble portion, or the first signal is located in the header portion, and the target signal comprises the data portion.

10. The method according to claim 8, wherein the second signal further comprises a header portion, the header portion is located before the data portion, the first signal is located in the header portion, and the target signal comprises the data portion.

11. The method according to claim 8, wherein the second signal further comprises a preamble portion, the preamble portion is located before the data portion, the first signal is located in the preamble portion, and the target signal comprises the data portion.

12. The method according to any one of claims 1 to 11, wherein a subcarrier used to carry the first signal is the same as a subcarrier used to carry the target signal.

13. The method according to any one of claims 1 to 11, wherein a subcarrier used to carry the first signal is the same as a subcarrier corresponding to one or more segments of N segments, and the N segments are all segments corresponding to N subcarriers used to carry the target signal, and N is a positive integer.

14. The method according to any one of claims 1 to 11, wherein a subcarrier used to carry the first signal is the same as some of N subcarriers used to carry the target signal, and N is a positive integer.

15. The method according to any one of claims 1 to 11, wherein a subcarrier used to carry the first signal and a subcarrier used to carry the target signal do not overlap, or partially overlap.

16. The method according to any one of claims 1 to 15, wherein a signal generation mode of the first signal is the same as the signal generation mode of the target signal.

17. The method according to any one of claims 1 to 15, wherein a signal generation mode of the first signal is predefined, or configured by the transmitting device.

18. The method according to any one of claims 1 to 17, wherein the first signal comprises first indication information, and the first indication information is used to indicate at least one of:
the signal generation mode of the target signal;
a signal generation parameter corresponding to the target signal; or
subcarrier information corresponding to the target signal.

19. The method according to claim 18, wherein the signal generation parameter corresponding to the target signal comprises at least one of:
a modulation mode used to generate the target signal;
a number of segments of N subcarriers used to carry the target signal, N being a positive integer;
a number of subcarriers comprised in a segment;
a bit carrying mode in a segment;
a number of bits carried by an orthogonal frequency division multiplexing (OFDM) symbol;
guard band information between segments;
subcarrier spacing corresponding to the target signal;
a position of a modulated subcarrier in a segment; or
a cyclic prefix (CP) length of an OFDM symbol.

20. The method according to claim 18 or 19, wherein the subcarrier information corresponding to the target signal comprises: position information and/or quantity information of subcarriers used to carry the target signal.

21. A wireless communication method, comprising:
receiving, by a receiving device, a first signal transmitted from a transmitting device, wherein the first signal is used to indicate a signal generation mode and/or resource position information of a target signal, and the target signal is a signal transmitted from the transmitting device to the receiving device.

22. The method according to claim 21, wherein the target signal comprises a low power-wake up signal (LP-WUS).

23. The method according to claim 21 or 22, wherein
the transmitting device is a network device, and the receiving device is a traditional terminal or an ambient power enabled (AMP) device; or
the transmitting device is a traditional terminal, and the receiving device is an ambient power enabled (AMP) device or a network device.

24. The method according to any one of claims 21 to 23, wherein the first signal is transmitted before the target signal.

25. The method of claim 24, wherein the first signal and the target signal are independent signals.

26. The method according to claim 25, wherein
the target signal comprises a preamble portion and a data portion; or
the target signal comprises a preamble portion, a header portion and a data portion; or
the target signal comprises a header portion and a data portion.

27. The method according to claim 24, wherein the first signal and the target signal belong to a second signal, wherein in the second signal, the first signal is located before the target signal.

28. The method according to claim 27, wherein the second signal comprises a data portion, the first signal is located before the data portion, and the target signal comprises the data portion.

29. The method according to claim 28, wherein the second signal further comprises a preamble portion and a header portion, the preamble portion and the header portion are located before the data portion, the first signal is located in the preamble portion, or the first signal is located in the header portion, and the target signal comprises the data portion.

30. The method according to claim 28, wherein the second signal further comprises a header portion, the header portion is located before the data portion, the first signal is located in the header portion, and the target signal comprises the data portion.

31. The method according to claim 28, wherein the second signal further comprises a preamble portion, the preamble portion is located before the data portion, the first signal is located in the preamble portion, and the target signal comprises the data portion.

32. The method according to any one of claims 21 to 31, wherein a subcarrier used to carry the first signal is the same as a subcarrier used to carry the target signal.

33. The method according to any one of claims 21 to 31, wherein a subcarrier used to carry the first signal is the same as a subcarrier corresponding to one or more segments of N segments, and the N segments are all segments corresponding to N subcarriers used to carry the target signal, and N is a positive integer.

34. The method according to any one of claims 21 to 31, wherein a subcarrier used to carry the first signal is the same as some of N subcarriers used to carry the target signal, and N is a positive integer.

35. The method according to any one of claims 21 to 31, wherein a subcarrier used to carry the first signal and a subcarrier used to carry the target signal do not overlap, or partially overlap.

36. The method according to any one of claims 21 to 35, wherein a signal generation mode of the first signal is the same as the signal generation mode of the target signal.

37. The method according to any one of claims 21 to 35, wherein a signal generation mode of the first signal is predefined, or configured by the transmitting device.

38. The method according to any one of claims 21 to 37, wherein the first signal comprises first indication information, and the first indication information is used to indicate at least one of:
the signal generation mode of the target signal;
a signal generation parameter corresponding to the target signal;
subcarrier information corresponding to the target signal.

39. The method according to claim 38, wherein the signal generation parameter corresponding to the target signal comprises at least one of:
a modulation mode used to generate the target signal;
a number of segments of N subcarriers used to carry the target signal, N being a positive integer;
a number of subcarriers comprised in a segment;
a bit carrying mode in a segment;
a number of bits carried by an orthogonal frequency division multiplexing (OFDM) symbol;
guard band information between segments;
subcarrier spacing corresponding to the target signal;
a position of a modulated subcarrier in a segment; or
a cyclic prefix (CP) length of an OFDM symbol.

40. The method according to claim 38 or 39, wherein the subcarrier information corresponding to the target signal comprises: position information and/or quantity information of subcarriers used to carry the target signal.

41. A transmitting device, comprising:
a communication unit, configured to transmit a first signal to a receiving device, wherein the first signal is used to indicate a signal generation mode and/or resource position information of a target signal, and the target signal is a signal transmitted from the transmitting device to the receiving device.

42. The transmitting device according to claim 41, wherein the target signal comprises a low power-wake up signal (LP-WUS).

43. The transmitting device according to claim 41 or 42, wherein
the transmitting device is a network device, and the receiving device is a traditional terminal or an ambient power enabled (AMP) device; or
the transmitting device is a traditional terminal, and the receiving device is an ambient power enabled (AMP) device or a network device.

44. The transmitting device according to any one of claims 41 to 43, wherein the first signal is transmitted before the target signal.

45. The transmitting device according to claim 44, wherein the first signal and the target signal are independent signals.

46. The transmitting device according to claim 45, wherein
the target signal comprises a preamble portion and a data portion; or
the target signal comprises a preamble portion, a header portion and a data portion; or
the target signal comprises a header portion and a data portion.

47. The transmitting device according to claim 44, wherein the first signal and the target signal belong to a second signal, wherein in the second signal, the first signal is located before the target signal.

48. The transmitting device according to claim 47, wherein the second signal comprises a data portion, the first signal is located before the data portion, and the target signal comprises the data portion.

49. The transmitting device according to claim 48, wherein the second signal further comprises a preamble portion and a header portion, the preamble portion and the header portion are located before the data portion, the first signal is located in the preamble portion, or the first signal is located in the header portion, and the target signal comprises the data portion.

50. The transmitting device according to claim 48, wherein the second signal further comprises a header portion, the header portion is located before the data portion, the first signal is located in the header portion, and the target signal comprises the data portion.

51. The transmitting device according to claim 48, wherein the second signal further comprises a preamble portion, the preamble portion is located before the data portion, the first signal is located in the preamble portion, and the target signal comprises the data portion.

52. The transmitting device according to any one of claims 41 to 51, wherein a subcarrier used to carry the first signal is the same as a subcarrier used to carry the target signal.

53. The transmitting device according to any one of claims 41 to 51, wherein a subcarrier used to carry the first signal is the same as a subcarrier corresponding to one or more segments of N segments, and the N segments are all segments corresponding to N subcarriers used to carry the target signal, and N is a positive integer.

54. The transmitting device according to any one of claims 41 to 51, wherein a subcarrier used to carry the first signal is the same as some of N subcarriers used to carry the target signal, and N is a positive integer.

55. The transmitting device according to any one of claims 41 to 51, wherein a subcarrier used to carry the first signal and a subcarrier used to carry the target signal do not overlap, or partially overlap.

56. The transmitting device according to any one of claims 41 to 55, wherein a signal generation mode of the first signal is the same as the signal generation mode of the target signal.

57. The transmitting device according to any one of claims 41 to 55, wherein a signal generation mode of the first signal is predefined, or configured by the transmitting device.

58. The transmitting device according to any one of claims 41 to 57, wherein the first signal comprises first indication information, and the first indication information is used to indicate at least one of:
the signal generation mode of the target signal;
a signal generation parameter corresponding to the target signal;
subcarrier information corresponding to the target signal.

59. The transmitting device according to claim 58, wherein the signal generation parameter corresponding to the target signal comprises at least one of:
a modulation mode used to generate the target signal;
a number of segments of N subcarriers used to carry the target signal, N being a positive integer;
a number of subcarriers comprised in a segment;
a bit carrying mode in a segment;
a number of bits carried by an orthogonal frequency division multiplexing (OFDM) symbol;
guard band information between segments;
subcarrier spacing corresponding to the target signal;
a position of a modulated subcarrier in a segment; or
a cyclic prefix (CP) length of an OFDM symbol.

60. The transmitting device according to claim 58 or 59, wherein the subcarrier information corresponding to the target signal comprises: position information and/or quantity information of subcarriers used to carry the target signal.

61. A receiving device, comprising:
a communication unit, configured to receive a first signal transmitted from a transmitting device, wherein the first signal is used to indicate a signal generation mode and/or resource position information of a target signal, and the target signal is a signal transmitted from the transmitting device to the receiving device.

62. The receiving device according to claim 61, wherein the target signal comprises a low power-wake up signal (LP-WUS).

63. The receiving device according to claim 61 or 62, wherein
the transmitting device is a network device, and the receiving device is a traditional terminal or an ambient power enabled (AMP) device; or
the transmitting device is a traditional terminal, and the receiving device is an ambient power enabled (AMP) device or a network device.

64. The receiving device according to any one of claims 61 to 63, wherein the first signal is transmitted before the target signal.

65. The receiving device according to claim 64, wherein the first signal and the target signal are independent signals.

66. The receiving device according to claim 65, wherein
the target signal comprises a preamble portion and a data portion; or
the target signal comprises a preamble portion, a header portion and a data portion; or
the target signal comprises a header portion and a data portion.

67. The receiving device according to claim 64, wherein the first signal and the target signal belong to a second signal, wherein in the second signal, the first signal is located before the target signal.

68. The receiving device according to claim 67, wherein the second signal comprises a data portion, the first signal is located before the data portion, and the target signal comprises the data portion.

69. The receiving device according to claim 68, wherein the second signal further comprises a preamble portion and a header portion, the preamble portion and the header portion are located before the data portion, the first signal is located in the preamble portion, or the first signal is located in the header portion, and the target signal comprises the data portion.

70. The receiving device according to claim 68, wherein the second signal further comprises a header portion, the header portion is located before the data portion, the first signal is located in the header portion, and the target signal comprises the data portion.

71. The receiving device according to claim 68, wherein the second signal further comprises a preamble portion, the preamble portion is located before the data portion, the first signal is located in the preamble portion, and the target signal comprises the data portion.

72. The receiving device according to any one of claims 61 to 71, wherein a subcarrier used to carry the first signal is the same as a subcarrier used to carry the target signal.

73. The receiving device according to any one of claims 61 to 71, wherein a subcarrier used to carry the first signal is the same as a subcarrier corresponding to one or more segments of N segments, and the N segments are all segments corresponding to N subcarriers used to carry the target signal, and N is a positive integer.

74. The receiving device according to any one of claims 61 to 71, wherein a subcarrier used to carry the first signal is the same as some of N subcarriers used to carry the target signal, and N is a positive integer.

75. The receiving device according to any one of claims 61 to 71, wherein a subcarrier used to carry the first signal and a subcarrier used to carry the target signal do not overlap, or partially overlap.

76. The receiving device according to any one of claims 61 to 75, wherein a signal generation mode of the first signal is the same as the signal generation mode of the target signal.

77. The receiving device according to any one of claims 61 to 75, wherein a signal generation mode of the first signal is predefined, or configured by the transmitting device.

78. The receiving device according to any one of claims 61 to 77, wherein the first signal comprises first indication information, and the first indication information is used to indicate at least one of:
the signal generation mode of the target signal;
a signal generation parameter corresponding to the target signal; or
subcarrier information corresponding to the target signal.

79. The receiving device according to claim 78, wherein the signal generation parameter corresponding to the target signal comprises at least one of:
a modulation mode used to generate the target signal;
a number of segments of N subcarriers used to carry the target signal, N being a positive integer;
a number of subcarriers comprised in a segment;
a bit carrying mode in a segment;
a number of bits carried by an orthogonal frequency division multiplexing (OFDM) symbol;
guard band information between segments;
subcarrier spacing corresponding to the target signal;
a position of a modulated subcarrier in a segment; or
a cyclic prefix (CP) length of an OFDM symbol.

80. The receiving device according to claim 78 or 79, wherein the subcarrier information corresponding to the target signal comprises: position information and/or quantity information of subcarriers used to carry the target signal.

81. A transmitting device, comprising: a processor and a memory, wherein the memory is configured to store a computer program, and the processor is configured to call and run the computer program stored in the memory to perform the method according to any one of claims 1 to 20.

82. A receiving device, comprising: a processor and a memory, wherein the memory is configured to store a computer program, and the processor is configured to call and run the computer program stored in the memory to perform the method according to any one of claims 21 to 40.

83. A chip, comprising: a processor, configured to call and run a computer program from a memory, to enable a device equipped with the chip to perform the method according to any one of claims 1 to 20, or the method according to any one of claims 21 to 40.

84. A computer-readable storage medium, configured to store a computer program, wherein the computer program enables a computer to perform the method according to any one of claims 1 to 20, or the method according to any one of claims 21 to 40.

85. A computer program product, comprising computer program instructions, wherein the computer program instructions enable a computer to perform the method according to any one of claims 1 to 20, or the method according to any one of claims 21 to 40.

86. A computer program, wherein the computer program enables a computer to perform the method according to any one of claims 1 to 20, or the method according to any one of claims 21 to 40.
